# EUROPEAN PATENT SPECIFICATION

(11) **EP 3 279 993 B1**
(45) Date of publication and mention of the grant of the patent: **01.08.2018**
(21) Application number: 16182263.0
(22) Date of filing: 01.08.2016
(51) Int. Cl.: H01M 10/052, H01M 10/42, H01M 10/657

(54) **BATTERY LIFE PROLONGATION**
VERLÄNGERUNG DER BATTERIELEBENSDAUER
PROLONGATION DE LA DURÉE DE VIE DE LA BATTERIE

(43) Date of publication of application: 07.02.2018
(73) Proprietor: Honeywell International Inc., Morris Plains, NJ 07950 (US)
(72) Inventor: IONESCU, Octavian-Narcis, Morris Plains, NJ 07950 (US); DUMITRU, Viorel G., Morris Plains, NJ 07950 (US); BUIU, Octavian, Morris Plains, NJ 07950 (US); SERBAN, Bogdan Catalin, Morris Plains, NJ 07950 (US); GEORGESCU, Ion, Morris Plains, NJ 07950 (US); BREZEANU, Mihai, Morris Plains, NJ 07950 (US)
(74) Representative: Houghton, Mark Phillip

(56) References cited:
- JP-A- 2013 185 894
- US-A- 5 728 482
- US-A1- 2016 006 081

## Description

### Technical Field

The present disclosure relates to methods, devices, system, and computer-readable media for battery life prolongation.

### Background

Batteries, such as lithium ion batteries, can be a source of energy for a variety of devices. Maximizing the effectiveness and longevity of these batteries is an important issue. In some examples, the batteries can include a plurality of battery cells. In these examples, premature usage of one of the plurality of battery cells can result in a premature failure of the battery. In some examples, electrodes within the battery cells can break down and/or separate. In some examples, the electrodes within the battery cells can include cracks and/or other impurities.

US2016/006081 A1 shows a device that comprises a cathode electrode having a cathode electrical terminal, anode electrode having an anode electrical terminal, gate electrode having a gate electrode electrical terminal, a circuit configured to measure an operating parameter of the device and to determine when a cell health event occurs and a circuit configured to respond to cell health event. The cathode, anode and gate electrodes are in electrochemical communication with an electrolyte. The gate electrode is permeable to mobile species which is redox-active at anode electrode and cathode electrode. The gate electrode is situated between cathode electrode and anode electrode. The device is periodically operated in a manner calculated to dissolve dendrites that may have begun to grow from one of the anode electrode or the cathode electrode.

JP2013/185894 A1 shows a method for detecting precipitation of lithium in a lithium secondary battery for an electric vehicle. Deposition of lithium in said lithium secondary battery is detected by an electron-spin-resonance method.

### Brief Description of the Drawings

Figure 1 is an example of a system for battery life prolongation consistent with the present disclosure.
Figure 2 is an example of battery cells with dendrite deposition and dissolution consistent with the present disclosure.
Figure 3 is an example of a method for battery life prolongation consistent with the present disclosure.
Figure 4 is an example of a diagram of a computing device for battery life prolongation consistent with one or more embodiments of the present disclosure.

### Detailed Description

Devices, methods, systems, and computer-readable media for battery life prolongation are described herein. One or more embodiments include a system comprising: a battery that includes a number of cells,
a number of microwave antennas each positioned proximate to a corresponding cell of the number of cells, a computing device to: monitor a health state of the number of cells, identify a cell from the number of cells based on the health state, and initiate microwave radiation for the identified cell utilizing the corresponding microwave antenna for the identified cell.

In some examples, batteries can utilize a positive electrode (e.g., cathode) and a negative electrode (e.g., anode) that are separated by an electrolyte solution. In some examples, lithium-ion batteries can utilize a cathode that comprises at least one of: a layered oxide material such as lithium cobalt oxide, a polyanion such as lithium iron phosphate, and/or a spinel such as lithium manganese oxide. In some examples, a lithium-ion battery can utilize an anode that comprises carbon. In some examples, the electrolyte solution between the cathode and the anode can comprise a mixture of organic carbonates such as ethylene carbonate or diethyl carbonate.

In some examples, batteries such as lithium-ion batteries can include cracks, imperfections, and/or other types of impurities on or within the anode of a battery cell that can cause an accumulation (e.g., crystallization, etc.) of metallic lithium on a surface of the anode. In some examples, the accumulation of metallic lithium on the surface of the anode can be a dendrite on the surface of the anode. In some examples, these dendrites can cause a premature aging of the battery cell. For example, the dendrites can cause the battery cell to fail earlier than expected and/or generate lower power levels than expected. In some examples, the dendrites can form across the electrolyte solution between the anode and the cathode. For example, the dendrites can form on the anode until the dendrite makes contact with the cathode. In this example, the battery cell can create a short circuit and fail.

The systems for battery life prolongation described herein can utilize a computing device to monitor dendrite formation within a number of battery cells of a battery. In some examples, the systems for battery life prolongation described herein can include a number of antennas that are positioned in a proximate position (e.g., near, between a case of the battery and a particular battery cell, etc.) to a corresponding battery cell of the battery. In some examples, the number of antennas can be coupled to a microwave generator that can be activated or deactivated by the computing device. In some examples, the computing device can utilize an electronic switch to activate or deactivate individual antennas from the number of antennas. In these examples, the computing device can monitor the dendrite formation within each cell of a battery and activate antennas that correspond to the battery cells with dendrite formation. In these examples, the antennas can generate heat to a proximate area of the battery cells with the dendrite formation to remove the dendrite. In some examples, the generated heat can melt or dissolve the dendrite. Removing the dendrite from the identified cell can ensure a particular distance exists between the cathode and anode, which can prolong the life of the identified cell as well as the battery.

The systems for battery life prolongation can be utilized to increase a life of a battery and/or battery cell that is susceptible to dendrite formation. In some examples, the systems for battery life prolongation can identify dendrite formation of individual cells within a battery and utilize a corresponding antenna to provide microwave radiation to the identified battery cell to melt or dissolve the dendrite.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit corresponds to the drawing figure number and the remaining digits identify an element or component in the drawing. Similar elements or components between different figures may be identified by the use of similar remaining digits.

As used herein, "a" or "a number of" something can refer to one or more such things. For example, "a number of devices" can refer to one or more devices. Additionally, the designator "N", as used herein, particularly with respect to reference numerals in the drawings, indicates that a number of the particular feature so designated can be included with a number of embodiments of the present disclosure.

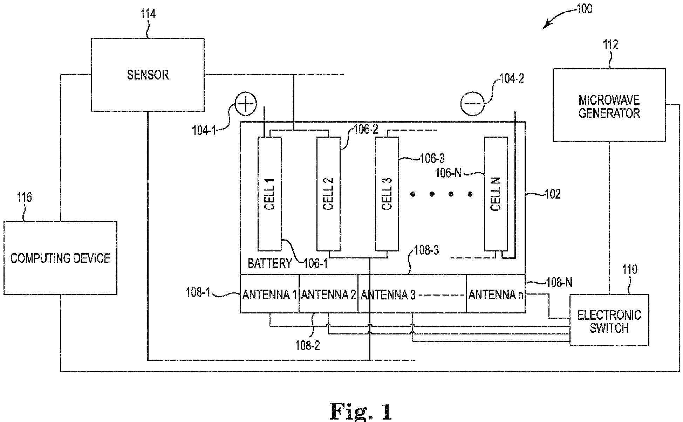

Figure 1 is an example of a system 100 for battery life prolongation consistent with the present disclosure. In some examples, the system 100 can be utilized to prolong the life of a battery 102. As described herein, the battery 102 can include a number of battery cells 106-1, 106-2, 106-3, 106-N. The number of battery cells 106-1, 106-2, 106-3, 106-N can be coupled together in series or in parallel. In some examples, the number of battery cells 106-1, 106-2, 106-3, 106-N can be coupled to a number of electrodes 104-1, 104-2 of the battery 102. In some examples, one of the electrodes 104-1, 104-2 can be a positive electrode (e.g., electrode 104-1) and one of the electrodes 104-1, 104-2 can be a negative electrode (e.g., electrode 104-2).

In some examples, each of the number of battery cells 106-1, 106-2, 106-3, 106-N can have a corresponding antenna 108-1, 108-2, 108-3, 108-N. In some examples, each of the number of antennas 108-1, 108-2, 108-3, 108-N can be positioned proximately to a corresponding battery cell 106-1, 106-2, 106-3, 106-N. For example, battery cell 106-1 can have antenna 108-1 positioned in a proximate position that is relatively close to the battery cell 106-1. As used herein, a proximate position is a relatively close position such that a microwave generated at the antenna 108-1, 108-2, 108-3, 108-N can affect the corresponding battery cell 106-1, 106-2, 106-3, 106-N to a greater degree compared to non-corresponding battery cells 106-1, 106-2, 106-3, 106-N.

In some examples, the number of antennas 108-1, 108-2, 108-3, 108-N can be within a case that encloses the number of battery cells 106-1, 106-2, 106-3, 106-N. In some examples, the number of antennas 108-1, 108-2, 108-3, 108-N can be in contact with a corresponding battery cell 106-1, 106-2, 106-3, 106-N. For example, antenna 108-3 can be in contact with battery cell 106-3. In some examples, the number of antennas 108-1, 108-2, 108-3, 108-N can be micro-strip antennas (e.g., printed antennas, micro-strip patch antenna. In some examples, the micro-strip antennas can utilize a micro-strip transmission line from the number of battery cells 06-1, 106-2, 106-3, 106-N to the electronic switch 110.

In some examples, the number of antennas 108-1, 108-2, 108-3, 108-N can be coupled to an electronic switch 110. In some examples, the electronic switch 110 can be utilized to individually activate or deactivate each of the number of antennas 108-1, 108-2, 108-3, 108-N. For example, antenna 108-1 can be activated when it is determined that battery cell 106-1 is at risk for generating a dendrite or has indicated a generated dendrite. In this example, the activated antenna 108-1 can utilize energy from a microwave generator 112 to increase a temperature of the battery cell 106-1. In this example, the increased temperature can melt or dissolve the dendrite formed on the battery cell 106-1. In some examples, the heat generated by the activated antenna 108-1 may not affect the temperature or may minimally affect the temperature of the other battery cells (e.g., battery cells 106-2, 106-3, 106-N, etc.).

In some examples, the electronic switch 110 can be coupled to a computing device 116. In some examples, the computing device 116 can be utilized to activate and/or deactivate each of the number of antennas 108-1, 108-2, 108-3, 108-N utilizing the electronic switch 110. In some examples, the computing device 116 can be coupled to the microwave generator 112. In some examples, the computing device 116 can be utilized to activate and/or deactivate the microwave generator 112.

In some examples, the computing device 116 can be utilized to determine when a dendrite formation has occurred or is likely to occur within one or more of the battery cells 106-1, 106-2, 106-3, 106-N. In some examples, the computing device 116 can be coupled to a sensor 114. In some examples, the sensor 114 can be coupled to each of the number of battery cells 106-1, 106-2, 106-3, 106-N. In some examples, the sensor 114 can be utilized to perform a number of tests on each of the number of battery cells 106-1, 106-2, 106-3, 106-N. In some examples, the data from the number of tests can be sent to the computing device 116.

In some examples, the sensor 114 can perform impedance spectroscopy on one or more of the battery cells 106-1, 106-2, 106-3, 106-N. In some examples impedance spectroscopy can measure the dielectric properties of a battery cell 106-1, 106-2, 106-3, 106-N as a function of frequency. In some examples, the sensor 114 can perform an internal resistance measurement on one or more of the battery cells 106-1, 106-2, 106-3, 106-N. In some examples, the internal resistance measurement can include determining an internal resistance of each of the number of battery cells 106-1, 106-2, 106-3, 106-N. That is, a resistance measurement can be determined by the sensor 114 for each of the number of battery cells 106-1, 106-2, 106-3, 106-N. In some examples, the sensor 114 can perform a charging/discharging time measurement. In some examples, the charging/discharging time measurement can be a quantity of time it takes to charge and/or discharge the battery cell 106-1, 106-2, 106-3, 106-N. In some examples, the number of tests can be utilized to indicate when a dendrite exists on the anode of a particular battery cell 106-1, 106-2, 106-3, 106-N.

In some examples, the sensor 114 can include a thermostat to measure a temperature of the battery cells 106-1, 106-2, 106-3, 106-N. In some examples, the thermostat can be utilized to identify a time to deactivate the microwave generator 112 and/or a corresponding antenna 108-1, 108-2, 108-3, 108-N. For example, a battery cell 106-1 can be identified to have a dendrite formation. In this example, the computing device 116 can activate the antenna 108-1 and the microwave generator to apply heat to the battery cell 160-1. In this example, the sensor 114 can utilize the thermostat to determine when the battery cell 106-1 reaches a particular temperature. As described herein, the thermostat can be utilized to identify when the temperature of the battery cell 106-1 is above a first threshold temperature (e.g., melting point of a dendrite, etc.) and/or below a second threshold temperature (e.g., melting point of anode or cathode within the battery cell, etc.).

In some examples, the computing device 116 can be utilized to identify a battery cell 106-1, 106-2, 106-3, 106-N that includes a dendrite and/or is at risk for having a dendrite as described herein. In some examples, the computing device 116 can utilize the sensor 114 and/or data from the number of tests to identify a battery cell 106-1, 106-2, 106-3, 106-N. In some examples, the computing device 116 can utilize the microwave generator 112 and/or electronic switch to activate an antenna 108-1, 108-2, 108-3, 108-N that corresponds to the identified battery cell 106-1, 106-2, 106-3, 106-N. In some examples, the computing device 116 can be utilized to determine when a dendrite structure of the identified battery cell has been removed. In some examples, the sensor 114 can be utilized to perform one or more of the tests described herein to determine that the dendrite has been removed from the identified battery cell.

In some examples, the system 100 can more efficiently remove dendrites with relatively less risk to damaging the battery 102 by activating only an antenna 108-1, 108-2, 108-3, 108-N that corresponds to an identified battery cell 106-1, 106-2, 106-3, 106-N. For example, activating only antennas 108-1, 108-2, 108-3, 108-N that correspond to identified battery cells 106-1, 106-2, 106-3, 106-N can utilize relatively less energy compared to utilizing microwaves to heat the entire battery 102. In addition, activating only antennas 108-1, 108-2, 108-3, 108-N that correspond to identified battery cells 106-1, 106-2, 106-3, 106-N can provide less heat to the overall battery 102 and thus have less risk of melting one or more of the electrodes, which can damage the battery 102.

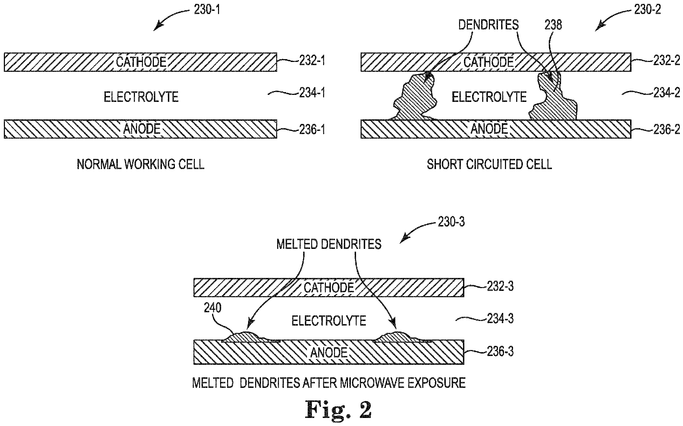

Figure 2 is an example of battery cells 230 with dendrite deposition and dissolution consistent with the present disclosure. In some examples, the battery cells 230 can be lithium-ion battery cells as described herein. In some examples, the battery cells can include a crack or other type of impurity within an anode 236 of the battery cell 230. As described herein, the crack or other type of impurity within the anode 236 can cause lithium metal to crystalize and/or accumulate on the anode 236 to form a number of dendrites 238. As described herein, the number of dendrites 238 can decrease performance of the battery cell 230 and/or cause a short within the battery cell 230.

In some examples, the battery cell 230-1 can be a normal working battery cell that is functioning to a manufacturer specification. In some examples, the battery cell 230-1 can include a cathode 232-1 that can be a positive electrode. In some examples, the cathode 232-1 can comprise at least one of: a layered oxide material such as lithium cobalt oxide, a polyanion such as lithium iron phosphate, and/or a spinel such as lithium manganese oxide. In some examples, the battery cell 230-1 can comprise an anode 236-1 that can be a negative electrode. In some examples, the anode 236-1 can comprise carbon, graphite, or other materials that can be utilized as a negative electrode within the battery cell 230-1. In some examples, the anode 236-1 and the cathode 232-1 can be separated by an electrolyte 234-1. In some examples, the electrolyte 234-1 can comprise a lithium salt in an organic solvent. For examples, the electrolyte 234-1 can be a mixture of organic carbonates such as ethylene carbonate or diethyl carbonate containing lithium ions. In some examples, the lithium ions can move from the anode 236-1 to the cathode 232-1 through the electrolyte.

In some examples, the battery cell 230-2 can include the same or similar elements as battery cell 230-1. For example, the battery cell 230-2 can include a cathode 232-2 and an anode 236-2 separated by an electrolyte 234-2. As described herein, cracks or other types of impurities in the anode 236-2 can create dendrites 238. As described herein, the dendrites 238 can be created by crystallization of lithium metal on the anode 236-2 at the crack or impurity of the anode 236-2. In some examples, the dendrite 238 can decrease a distance between the anode 236-1 and the cathode 232-2 and also decrease a quantity of electrolyte 234-2 that is between the anode 236-1 and the cathode 232-2. In some examples, the dendrite 238 can be in contact with the cathode and create a short circuit. Thus, in some examples, the battery cell 230-2 can be a short circuited battery cell.

As described herein, the dendrites 238 can be melted or dissolved with an application of microwaves as described herein. For example, a microwave antenna coupled to a microwave generator can apply microwaves to the battery cell 230-2. In some examples, the increased temperature caused by the microwaves can melt or dissolve the dendrites 238. As described herein, a quantity of microwaves and/or heat applied to the battery cell 230-2 can be lower than a threshold value. For example, over application of microwaves or heat can melt the cathode 232-2 or the anode 236-2. In this example, the threshold value can correspond to a melting point of the anode 236-2 and/or a melting point of the cathode 232-2. In some examples, melting or dissolving the dendrite 238 can extend the life of the battery cell 230-2.

The battery cell 230-3 can include the same or similar elements as battery cell 230-1. For example, the battery cell 230-3 can include a cathode 232-3 and an anode 236-3 separated by an electrolyte 234-3. In some examples, the battery cell 230-3 can be a battery cell that has had exposure to microwave radiation applied by a microwave antenna as described herein. For example, the battery cell 230-3 can include melted dendrites 240. As illustrated by battery cell 230-3, the melted dendrites 240 increase a space between the cathode 232-3 and the anode 232-3 compared to the battery cell 230-2 with the dendrites 238.

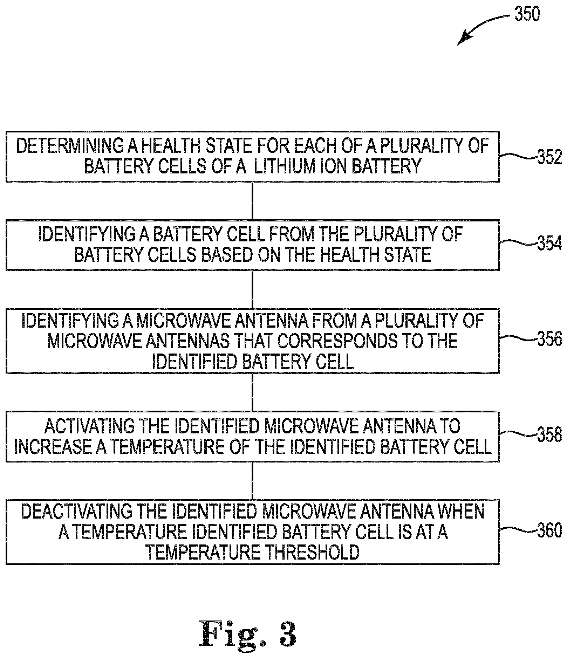

Figure 3 is an example of a method 350 for battery life prolongation consistent with the present disclosure. In some examples, the method 350 can be executed by a computing device utilized with a system 100 as referenced in Figure 1. In some examples, the method 350 can be utilized to melt or dissolve dendrites as illustrated in Figure 2.

At 352, the method 350 can include determining a health state for each of a plurality of battery cells of a lithium ion battery. As used herein, a health state of a battery cell can include whether a dendrite formation has occurred or is likely to occur within the battery cell. The health state can be determined by a computing device that can utilize a sensor to perform a number of tests as described herein. In some examples, the number of tests can include, but is not limited to: impedance spectroscopy, internal resistance measurements, and/or charging/discharging time measurements. In some examples, the health state or information relating to the health state can include an impedance level of the battery cell, an internal resistance of the battery cell, a charging time of the battery cell, and a discharging time of the battery cell.

At 354, the method 350 can include identifying a battery cell from the plurality of battery cells based on the health state. In some examples, the number of tests and/or the health state of a battery cell can be utilized to identify a battery cell that includes a dendrite formation. For example, the computing device can continuously monitor the battery cells and/or continuously perform tests on the battery cells. In this example, the tests can indicate that a dendrite has formed within a particular battery cell. In this example, the particular battery cell can be identified by the computing device.

At 356, the method 350 can include identifying a microwave antenna from a plurality of microwave antennas that corresponds to the identified battery cell. As described herein with reference to Figure 1, each of the number of battery cells can have a corresponding microwave antenna positioned proximately to the corresponding battery cell. In some examples, a computing device can identify the corresponding microwave antenna for the identified battery cell.

At 358, the method 350 can include activating the identified microwave antenna to increase a temperature of the identified battery cell. As described herein, the computing device can utilize an electronic switch to activate the corresponding microwave antenna and activate the microwave generator to provide microwaves to the identified battery cell.

As described herein, the microwaves can be utilized to increase a temperature of the identified battery cell to a temperature that is below a first threshold value and above a second threshold value. In some examples, the first threshold value can be based on a melting point of the cathode or anode within the identified battery cell.

In some examples, the second threshold can be based on the melting point of the dendrite formation within the identified battery cell. In this way, the dendrite can be melted or dissolved without damaging the identified battery cell. In some examples, the temperature threshold is based on a melting point of an anode of the identified battery cell and a dissolution temperature of a dendrite structure on the anode of the identified battery cell. In a specific example, the temperature of the battery cell can be increased to approximately 60 degrees Celsius. In this example, 60 degrees Celsius can be above a melting point of a dendrite structure and below the melting point of the anode or cathode of the battery cell.

At 360, the method 350 can include deactivating the identified microwave antenna when a temperature of identified battery cell is at a temperature threshold. As described herein, the computing device can utilize an electronic switch to deactivate the microwave antenna. In some examples, the computing device can also deactivate the microwave generator coupled to the microwave antenna. In some examples, the computing device can deactivate the microwave generator and/or the microwave antenna before the temperature of the identified battery cell exceeds the first threshold to avoid damage to the identified battery cell.

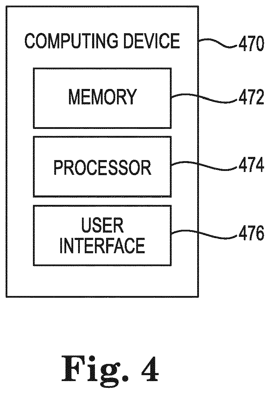

Figure 4 is an example of a diagram of a computing device 470 for a dynamic temperature sensor consistent with one or more embodiments of the present disclosure. Computing device 470 can be, for example, an embedded system as described herein, among other types of computing devices. For example, the computing device 470 can be a computing device 116 utilized in system 100 as referenced in Figure 1.

As shown in Figure 4, computing device 470 includes a memory 472 and a processor 474 coupled to user interface 476. Memory 472 can be any type of storage medium that can be accessed by processor 474, which performs various examples of the present disclosure. For example, memory 472 can be a non-transitory computer readable medium having computer readable instructions (e.g., computer program instructions) stored thereon.

Processor 474 executes instructions to determine a health state for each of a plurality of battery cells in accordance with one or more embodiments of the present disclosure. Processor 474 can also execute instructions to determine when a temperature of a battery cell is below a first threshold and/or above a second threshold. Processor 474 can also execute instructions to activate a microwave antenna corresponding to an identified battery cell.

Further, although memory 472, processor 474 and user interface 476 are illustrated as being located in computing device 470, embodiments of the present disclosure are not so limited. For example, memory 472 can also be located internal to another computing resource (e.g., enabling computer readable instructions to be downloaded over the Internet or another wired or wireless connection). Part of the memory can be storage in a cloud storage. Processor 474 can be a cloud computer.

As shown in Figure 4, computing device 470 can also include a user interface 476. User interface 476 can include, for example, a display (e.g., a screen, an LED light, etc.). The display can be, for instance, a touch-screen (e.g., the display can include touch-screen capabilities). User interface 476 (e.g., the display of user interface 476) can provide (e.g., display and/or present) information to a user of computing device 470.

Additionally, computing device 470 can receive information from the user of computing device 470 through an interaction with the user via user interface 476. For example, computing device 470 (e.g., the display of user interface 476) can receive input from the user via user interface 476. The user can enter the input into computing device 470 using, for instance, a mouse and/or keyboard associated with computing device 470, or by touching the display of user interface 476 in embodiments in which the display includes touch-screen capabilities (e.g., embodiments in which the display is a touch screen).

As used herein, "logic" is an alternative or additional processing resource to execute the actions and/or functions, etc., described herein, which includes hardware (e.g., various forms of transistor logic, application specific integrated circuits (ASICs), etc.), field programmable gate arrays (FPGAs), as opposed to computer executable instructions (e.g., software, firmware, etc.) stored in memory and executable by a processor.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended.

## Claims

1. A system (100) for battery life prolongation, comprising: a battery (102) that includes a number of cells (106-1, 106-2, 106-3, 106 -N); a number of microwave antennas (108-1, 108-2, 108-3, 108-N) each positioned proximate to a corresponding cell of the number of cells (106-1, 106-2, 106-3, 106 -N); a computing device (116,470) to: monitor a health state of the number of cells (106-1, 106-2, 106-3, 106 -N); identify a cell from the number of cells (106-1, 106-2, 106-3, 106 -N) based on the health state; and initiate microwave radiation for the identified cell utilizing the corresponding microwave antenna (108-1, 108-2, 108-3, 108-N) for the identified cell.

2. The system of claim 1, wherein the battery (102) is a lithium ion battery.

3. The system of claim 1, wherein the health state is based in part on dendrite (238) on an anode (236) the number of cells (106-1, 106-2, 106-3, 106 -N).

4. The system of claim 3, wherein the microwave radiation increases a temperature of the identified cell and increases dissolution of the dendrite (238) on an anode (236) of the identified cell.

5. The system of claim 1, comprising a thermostat to measure a temperature of the number of cells (106-1, 106-2, 106-3, 106 -N).

6. The system of claim 5, wherein the computing device (116,470) utilizes the thermostat to identify a time to deactivate the microwave radiation.

7. The system of claim 1, wherein the number of microwave antennas (108-1, 108-2, 108-3, 108-N) are coupled to an electronic switch (110) that is coupled to the computing device (116, 470) and a microwave generator (112).

8. The system of claim 7, wherein the computing device (116,470) individually activates or deactivates a single microwave antenna (108-1, 108-2, 108-3, 108-N) from the number of microwave antennas (108-1, 108-2, 108-3, 108-N) utilizing the electronic switch (110).

9. The system of claim 1, wherein the number of microwave antennas (108-1, 108-2, 108-3, 108-N) include a number of micro-strip antennas.

10. The system of claim 1, wherein monitoring the health state of the number of cells (106-1, 106-2, 106-3, 106-N) includes utilizing at least one of:
impedance spectroscopy;
internal resistance measurement; and charging/discharging time measurement.

## Patentansprüche

1. System (100) zum Verlängern der Batterielebensdauer, das Folgendes umfasst:
eine Batterie (102), die eine Anzahl von Zellen (106-1, 106-2, 106-3, 106-N) umfasst;
eine Anzahl von Mikrowellenantennen (108-1, 108-2, 108-3, 108-N), wovon jede bei einer entsprechenden Zelle der Anzahl von Zellen (106-1, 106-2, 106-3, 106-N) positioniert ist;
eine Computervorrichtung (116, 470), die die folgenden Schritte ausführt:
Überwachen eines Batteriezustands der Anzahl von Zellen (106-1, 106-2, 106-3, 106-N);
Identifizieren einer Zelle aus der Anzahl von Zellen (106-1, 106-2, 106-3, 106-N) auf der Basis des Batteriezustands; und
Auslösen von Mikrowellenstrahlung für die identifizierte Zelle unter Nutzung der entsprechenden Mikrowellenantenne (108-1, 108-2, 108-3, 108-N) für die identifizierte Zelle.

2. System nach Anspruch 1, wobei die Batterie (102) eine Lithium-Ionen-Batterie ist.

3. System nach Anspruch 1, wobei der Batteriezustand zum Teil auf der Ausbildung von Dendriten (238) an einer Anode (236) der Anzahl von Zellen (106-1, 106-2, 106-3, 106-N) beruht.

4. System nach Anspruch 3, wobei die Mikrowellenstrahlung eine Temperatur der identifizierten Zelle erhöht und das Auflösen der Dendritenbildung (238) an einer Anode (236) der identifizierten Zelle verbessert.

5. System nach Anspruch 1, das einen Thermostaten umfasst, um eine Temperatur der Anzahl von Zellen (106-1, 106-2, 106-3, 106-N) zu messen.

6. System nach Anspruch 5, wobei die Computervorrichtung (116, 470) den Thermostaten verwendet, um eine Zeit zum Deaktivieren der Mikrowellenstrahlung zu identifizieren.

7. System nach Anspruch 1, wobei die Anzahl der Mikrowellenantennen (108-1, 108-2, 108-3, 108-N) mit einem elektronischen Schalter (110) gekoppelt ist, der mit der Computervorrichtung (116, 470) und einem Mikrowellengenerator (112) gekoppelt ist.

8. System nach Anspruch 7, wobei die Computervorrichtung (116, 470) eine einzelne Mikrowellenantenne (108-1, 108-2, 108-3, 108-N) aus der Anzahl von Mikrowellenantennen (108-1, 108-2, 108-3, 108-N) unter Verwendung des elektronischen Schalters (110) einzeln aktiviert oder deaktiviert.

9. System nach Anspruch 1, wobei die Anzahl der Mikrowellenantennen (108-1, 108-2, 108-3, 108-N) eine Anzahl von Mikrowellen-Streifenantennen umfasst.

10. System nach Anspruch 1, wobei das Überwachen des Batteriezustands der Anzahl von Zellen (106-1, 106-2, 106-3, 106-N) die Nutzung von wenigstens einer der folgenden Techniken umfasst:
Impedanzspektroskopie;
Messung des Innenwiderstands; und
Messung der Lade- bzw. Entladezeit.

## Revendications

1. Système (100) autorisant la prolongation de la durée de vie d'une batterie, comprenant :
une batterie (102) qui inclut un certain nombre de cellules (106-1, 106-2, 106-3, 106-N),
un certain nombre d'antennes hyperfréquence (108-1, 108-2, 108-3, 108-N), chacune étant positionnée à proximité d'une cellule correspondante parmi les différentes cellules (106-1, 106-2, 106-3, 106-N),
un dispositif de calcul (116, 470) destiné à :
surveiller l'état de santé des différentes cellules (106-1, 106-2, 106-3, 106-N),
identifier une cellule à partir des différentes cellules (106-1, 106-2, 106-3, 106-N) sur la base de l'état de santé, et
lancer un rayonnement hyperfréquence pour la cellule identifiée en utilisant l'antenne hyperfréquence (108-1, 108-2, 108-3, 108-N) correspondante pour la cellule identifiée.

2. Système selon la revendication 1, dans lequel la batterie (102) est une batterie lithium ion.

3. Système selon la revendication 1, dans lequel l'état de santé est fondé en partie sur la formation de dendrite (238) sur une anode (236) des différentes cellules (106-1, 106-2, 106-3, 106-N).

4. Système selon la revendication 3, dans lequel le rayonnement hyperfréquence augmente la température de la cellule identifiée et augmente la dissolution de la formation de dendrite (238) sur une anode (236) de la cellule identifiée.

5. Système selon la revendication 1, comprenant un thermostat permettant de mesurer la température des différentes cellules (106-1, 106-2, 106-3, 106-N).

6. Système selon la revendication 5, dans lequel le dispositif de calcul (116, 470) utilise le thermostat pour identifier une durée pour désactiver le rayonnement hyperfréquence.

7. Système selon la revendication 1, dans lequel les différentes antennes hyperfréquence (108-1, 108-2, 108-3, 108-N) sont couplées à un interrupteur électronique (110) qui est couplé au dispositif de calcul (116, 470) et à un générateur hyperfréquence (112).

8. Système selon la revendication 7, dans lequel le dispositif de calcul (116, 470) active ou désactive individuellement une seule antenne hyperfréquence (108-1, 108-2, 108-3, 108-N) parmi les différentes antennes hyperfréquence (108-1, 108-2, 108-3, 108-N) utilisant l'interrupteur électronique (110)

9. Système selon la revendication 1, dans lequel les différentes antennes hyperfréquence (108-1, 108-2, 108-3, 108-N) incluent un certain nombre d'antennes à micro-ruban.

10. Système selon la revendication 1, dans lequel la surveillance de l'état de santé des différentes cellules (106-1, 106-2, 106-3, 106-N) inclut l'utilisation d'au moins un procédé parmi :
la spectroscopie d'impédance,
la mesure de résistance interne, et
la mesure de temps de charge ou de décharge.
